# EUROPÄISCHE PATENTSCHRIFT

(11) **EP 1 110 285 B1**
(45) Veröffentlichungstag und Bekanntmachung des Hinweises auf die Patenterteilung: **13.01.2010**
(21) Anmeldenummer: 99942867.5
(22) Anmeldetag: 13.08.1999
(51) Int. Cl.: H02B 5/06, H02B 5/00

(54) **HOCHSPANNUNGSSCHALTANLAGE UND VERFAHREN ZUM TRANSPORT DER HOCHSPANNUNGSSCHALTANLAGE**
HIGH-VOLTAGE SWITCHGEAR AND METHOD FOR TRANSPORTING SAID SWITCHGEAR
INSTALLATION DE DISTRIBUTION ELECTRIQUE HAUTE TENSION ET PROCEDE POUR TRANSPORTER LADITE INSTALLATION DE DISTRIBUTION ELECTRIQUE

(30) Priorität: 27.08.1998 DE 19838980; 04.02.1999 DE 19904402
(43) Veröffentlichungstag der Anmeldung: 27.06.2001
(73) Patentinhaber: ABB AG, 68309 Mannheim (DE)
(72) Erfinder: OEHMIG, Wilhelm, D-67071 Ludwigshafen (DE); SCHIPPEL, Harald, D-67480 Edenkoben (DE); HEINEN,Beate, 68309 Mannheim (DE); FEUCHTER,Bernhard, 68766 Hockenheim (DE); POSTLER, Helge, D-68307 Mannheim (DE)
(86) Internationale Anmeldenummer: PCT/EP1999/005953
(87) Internationale Veröffentlichungsnummer: WO 2000/013275

(56) Entgegenhaltungen:
- DE-A- 2 137 089
- DE-A- 4 241 952
- DE-A- 19 637 047

## Beschreibung

Die Erfindung betrifft eine Hochspannungsschaltanlage nach dem Oberbegriff des Anspruches 1 und ein Transportverfahren dafür.

Hochspannungsschaltanlagen, insbesondere für Umspannwerke, werden mehr und mehr fabrikseitig vorgefertigt, da solche vorgefertigten modularen Umspannwerke optimale Lösungsmöglichkeiten für viele Antworten der elektrischen Energieversorgung bilden.

In der DE 4241952 A ist ein transportfähiger Schaltanlagen-Container mit Freileitungsdurchführungen beschrieben, welcher gekapselte Schaltfelder mit SF6-isolierten Betriebsmitteln aufnimmt.

Die DE 19637047 A1 offenbart einen Container, in welchem eine Hochspannungsanlage, eine Mittelspannungsanlage sowie Eigenversorgungseinheiten, Kleinkläranlagen und Ölaufbereitungseinheiten untergebracht sind.

Aufgabe der Erfindung ist es, eine transportable Hochspannungsschaltanlage der eingangs genannten Art zu schaffen, bei der Transport und Montage weiter erheblich vereinfacht sind. Weiterhin soll ein Verfahren angegeben werden, mit denen der Transport, Montage und Prüfung verbessert werden können.

Diese Aufgabe wird erfindungsgemäß gelöst durch die kennzeichnenden Merkmale des Anspruches 1.
Erfindungsgemäß wird die gesamte Anlage auf der Grundplatte für den ersten Normcontainer aufgebaut und geprüft. Diejenigen Komponenten, die gemessen von der Grundplatte aus höher sind als ein Normcontainer, werden nach der Prüfung im Werk so demontiert, daß sie mit einem Normcontainer transportiert werden können. Dabei kann die Quertraverse mit den daran befindlichen Pfeilerteilen und den daran befestigten und montierten Trenn- und Erdungsschalterpolen in einen zweiten Normcontainer eingesetzt und darin befestigt und zur Baustelle transportiert werden. Die übrigen Komponenten können erforderlichenfalls in einen drittem Normcontainer transportiert werden.

Die Demontage nach der Prüfung im Werk erfolgt so, daß evtl. schon vorgenommene Justierungen auf geeignete Weise gekennzeichnet und arretiert werden und so erhalten bleiben; der Transport erfolgt dann mit gerprüften und justierten Teilen bzw. Komponenten.

Nach Transport zur Baustelle können die geprüften und justierten Schaltanlagenkomponenten auf der Grundplatte des ersten Normcontainers wieder aufgebaut und zusammengebaut werden, wodurch die Schaltanlage gebildet wird.

Anhand der Zeichnung, in der ein Lösungsbeispiel der Erfindung dargestellt ist, sollen die Erfindung sowie weitere vorteilhafte Ausgestaltungen und Verbesserungen der Erfindung näher erläutert werden.

Es zeigen:
- Fig. 1: eine Seitenansicht einer erfindungsgemäßen Schaltanlage,
- Fig. 2: eine Schnittansicht der Schaltanlage gemäß Schnittlinie II-II der Fig. 1, und
- Fig. 3: eine Aufsicht auf die Schaltanlage gemäß den Fig. 1 und 2.

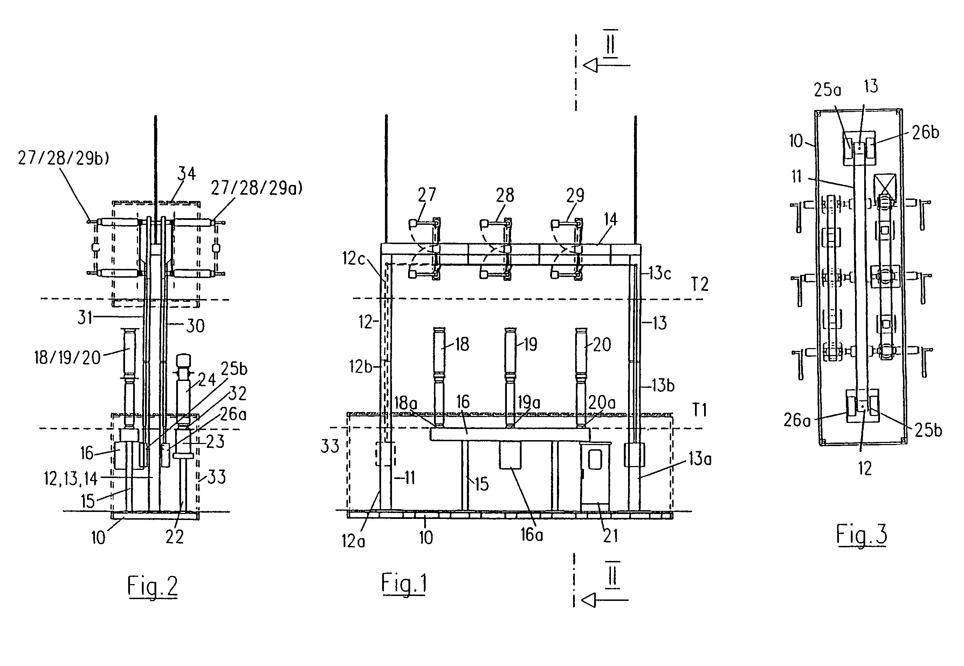

Auf einer Grundplatte 10, die bezüglich der Abmessungen der Bodenplatte eines Normcontainers entspricht, die aber gegenüber einer solchen Bodenplatte verwindungssteif gemacht ist, ist ein Portal 11 aufgestellt, mit zwei Pfeilern 12 und 13 und einer horizontalen Quertraverse 14. Auf der Grundplatte 10 ist ein Gestell 15 aufgestellt, welches einen Querkasten 16 mit Antriebskasten 16a besitzt, auf dem Leistungsschalterpole 18, 19 und 20 aufgestellt bzw. befestigt sind. Auf der Grundplatte 10 ist weiterhin ein Steuerschrank 21 aufgestellt. Ebenfalls parallel zur Längsseitenkante der Grundplatte 10 befindet sich wenigstens ein Traggestell 22 mit Klemmenkästen 23, auf denen Wandler 24 aufgestellt ist. Unmittelbar an dem Traggerüst 12 bis 14 und zwar beidseitig zu den Pfeilen 12 und 13 sind Antriebe 25a, 25b und 26a, 26b für an der Quertraverse 14 angebrachte Drehtrenner 27, 28, 29 mit nicht näher bezeichneten Ebenen befestigt. Die Bezugsziffern 25a, 25b bezeichnen die Antriebe für die Drehtrenner 27, 28, 29 und die Ziffern 26a, 26b die Antriebe für die Erder. Man erkennt aus der Fig. 2 und 3, daß jeweils Trennerpaare vorgesehen sind, die beidseitig zur Quertraverse angeordnet sind. Beide Trennerpaare werden durch "a" und "b" in der Fig. 2 unterschieden. Über Verbindungsstangen 30a, 30b und 31 a, 31 b werden die Antriebsbewegungen der Antriebe 25a 25b und 26a, 26b auf die entsprechenden Trennerpole 27/28/29a bzw. 27/28/29b übertragen.

Aus den Fig. 1 und 2 ist ersichtlich, daß die Pfeiler 12 und 13 in mehrere Teile unterteilt sind, nämlich in einen Teil 12a und 13a, die unmittelbar auf der Grundplatte 10 aufgeständert sind. Der Pfeiler 12 ist darüber hinaus noch weiter unterteilt in Teile 12b und 12c, ebenso wie der Pfeiler 13 in die Pfeilerteilstücke 13a, 13b und 13c unterteilt ist. Die Trennfuge zwischen den Teilstücken 12a und 12b bzw. 13a und 13b befindet sich in einer solchen Höhe über der Grundplatte 10, daß die Pfeilerteilstücke 12a und 13a jeweils in einen Normcontainer passen. Die Leistungsschalterpole 18, 19 und 20 sind von dem Querkasten 16 an der Trennstelle 18a, 19a und 20a trennbar, so daß die Leistungsschalterpole von dem Querkasten 16 demontiert werden können. Zwischen den Klemmenkästen 23 und den Wandlern 24 sind ebenfalls Trennstellen 32 vorgesehen, wodurch erreicht wird, daß die unmittelbar auf der Grundplatte 10 aufgestellten Komponenten der Schaltanlage in einen Normcontainer hineinpassen, der in den Fig. 1 und 2 strichliert dargestellt ist und die Bezugsziffer 33 trägt. Dieser erste Normcontainer 33 kann ohne weiteres zur Baustelle transportiert werden.

Nach Teilung des Pfeilers 12 bzw. 13 an der Teil- oder Trennstelle zwischen den Pfeilerteilstücken 12b und 12c bzw. 13b und 13c können diese Pfeilerteilstücke 12c, 13c zusammen mit der Quertraverse 14 und den Drehtrennschalterpaaren 27, 28 und 29 mit zugehörigen Erdern in einen zweiten Normcontainer 34 eingesetzt werden.

Zum Transport werden jeweils die Isolatoren mit angebauten Trennerarmen und -kontakten von den Antriebsplatten getrennt. Vorgenommene Justierungen werden durch Transportsicherungen, Kennzeichnungen und Arretierungen gehalten.

Die übrigen Komponenten, die Leistungsschalterpole 18, 19 und 20 sowie Antriebsverbindungselemente für die Trennerantriebe und darüber hinaus auch die Pfeilerteilstücke 12b und 12c; 13b und 13c können dann in beiden Normcontainern oder zusätzlich in einen dritten Normcontainer eingesetzt werden, mit dem diese an die Baustelle gefahren werden. Gegebenenfalls besteht die Möglichkeit, die transportsicheren Verpackungen für alle Komponenten mehrfach zu verwenden.

Nachdem die Schaltanlage im Werk so auf der Grundplatte 10 aufgebaut ist, wie in den Fig. 1 und 2 dargestellt, kann die Schaltanlage werksseitig vollständig geprüft werden; nach den Demontagearbeiten an den entsprechenden Teilungsstellen 18a, 19a und 20a sowie 32 usw. können die einzelnen geprüften Schaltanlagenkomponenten auf eine Baustelle gefahren und dort nach Ausbau aus den Normcontainern zusammenmontiert werden; weil die einzelnen Komponenten vorab geprüft sind, ist nur noch eine vereinfachte Endprüfung der kompletten Schaltanlage erforderlich. Die Grundplatte 10 verbleibt als Basisplatte für die Schaltanlage auf der Baustelle, die anderen Normcontainer sowie die Verpackungen werden zur Wiederverwendung ins Werk zurückgebracht.

Es ist selbstverständlich, daß die in den Fig. 1 bis 3 dargestellte Schaltanlage modifiziert werden kann, wobei die unterschiedlichsten Schaltungen erzielt werden können. So können eine H-Schaltung, eine Schaltung gemäß der Eineinhalb-Leistungsschalter-Methode oder eine Ringschaltanlage mit Einzel- oder Doppelsammelschienenanordnungen aufgebaut werden, wobei die Grundmodule in den Fig. 1 bis 3 beschrieben sind und in Normcontainern transportiert werden können.

Nachzutragen ist, daß die strichliert gezeichneten Linien T₁ und T₂ diejenigen Ebenen darstellen, die die Trenn- bzw. Demontageebenen bilden, an denen die Schaltanlage aufgetrennt bzw. demontiert werden kann, damit die Komponenten jeweils in die Normcontainer 33 bzw. 34 passen.

## Patentansprüche

1. Transportable Hochspannungs-Freiluftschaltanlage, mit einer der Anzahl der Phasen entsprechenden Anzahl von Leistungs-, Trenn- und Erdungsschalterpolen (18, 19, 20) mit ihren Antriebsvorrichtungen, mit Steuerschränken, Wandlern, Komponententrag- und Stützelementen und dgl., mit einem portalartigen Traggerüst mit senkrechten Pfeilern (12, 13) und einer horizontalen Quertraverse (14), wobei an letzterer die Trenn- und Erdungsschalterpole befestigt und die übrigen Komponenten mit deren Trägern und das Traggerüst auf einer Grundplatte (10) aufgestellt sind, **dadurch gekennzeichnet, daß** die Grundplatte (10) die Abmessungen einer Normcontainergrundplatte aufweist, daß die senkrechten Pfeiler (12, 13) und die Komponenten in ihrer Höhe so unterteilt sind, daß nach Teildemontage die Komponententeile und Pfeilerteile (12a, 13a), die auf der Grundplatte (10) aufgestellt sind, in einen ersten Normcontainer (33) passen, wobei sie für sich betriebsbereit bleiben, daß die Trenn- und Erdungsschalterpole mit weiteren Komponenten sowie die Quertraverse (14) und je ein Pfeilerteilstück (12c, 13c) in einen zweiten Normcontainer (34) passen, wobei die Pfeilerteilstücke (12c, 13c) auf der Bodenplatte des zweiten Normcontainers (34) aufgestellt sind und somit die Komponententrag- und Stützelemente der Trenn- und Erdungsschalterpole sowie diese selbst tragen, und daß die verbliebenen Komponenten und Pfeilerteile (12b, 13b) in den ersten und/oder zweiten und/oder in einen dritten Normcontainer einbaubar sind.

2. Transportverfahren für die Schaltanlage gemäß Anspruch 1, **dadurch gekennzeichnet, daß** die Anlage werksseitig auf der Grundplatte (10) des ersten Normcontainers (33) komplett montiert wird und alle Anlagenteile werksseitig komplett geprüft werden, daß die Anlagenkomponenten so getrennt werden, daß die zugehörigen Teile jeweils in die Normcontainer passen, und daß nach Transport die Anlagenkomponenten zusammengebaut und endgeprüft werden.

## Claims

1. A transportable high-voltage open-air switchgear, comprising a number of power circuit breaker, disconnecting switch and earthing switch poles (18, 19, 20) with their drive apparatuses, which poles correspond to the number of phases, comprising control cabinets, converters, component carrying and support elements and the like, with a portal-like support frame with vertical mounts (12, 13) and a horizontal cross-bar (14), with the poles of the disconnecting and earthing switch poles being fixed to said cross-bar, and the other components are placed with their supports and the support frame on a base plate (10), **characterized in that** the base plate (10) has the dimensions of a standard container base plate, the vertical mounts (12, 13) and the components are subdivided in their height in such a way that, after partial dismounting, the parts of the components and mounts (12a, 13a) which are placed on the base plate (10) fit into a first standard container (33) and remain readily functional by themselves, the poles of the disconnecting and earthing switches with further components and the cross-bar (14) and a portion each of the mount (12c, 13c) fit into a second standard container (34), with the portions of the mounts (12c, 13c) being placed on the base plate of the second standard container (34) and thus carrying the component carrying and support elements of the disconnecting and earthing switch poles as well as said poles themselves, and the remaining components and mount parts (12b, 13b) can be installed in the first and/or second and/or in a third standard container.

2. A transport method for the switchgear according to claim 1, **characterized in that** the installation is completely factory-mounted on the base plate (10) of the first standard container (33) and all parts of the installation are checked completely at the factory, the components of the installation are separated in such a way that the associated parts each fit into the standard container and, after transport, the components of the installation are assembled and finally checked.

## Revendications

1. Installation transportable de commutation haute tension pour montage à l'extérieur, avec un nombre de pôles de contacteurs de puissance, de sectionnement et de mise à la terre (18, 19, 20) correspondant au nombre de phases munis de leurs dispositifs d'actionnement, avec des armoires de commande, transformateurs, éléments de support et d'appui des composants et similaires, avec un bâti portant en forme de portique muni de montants verticaux (12, 13) et d'une traverse horizontale (14), les pôles de contacteur de sectionnement et de mise à la terre étant fixés à cette dernière et les autres composants étant posés avec leurs supports et le bâti portant sur une plaque de socle (10) **caractérisé en ce que** la plaque de socle (10) a les dimensions d'une plaque de fond de conteneur normalisé, **en ce que** les montants verticaux (12, 13) et les composants sont divisés dans leur hauteur de telle façon qu'après un démontage partiel, les pièces des composants et les pièces des montants (12a, 13a) installées sur la plaque de socle (10) entrent dans un premier conteneur normalisé (33) tout en restant prêtes à fonctionner, en que le les pôles de contacteur de sectionnement et de mise à la terre avec les autres composants et la traverse (14) ainsi qu'un morceau de chaque montant (12c, 13c) entrent dans un autre conteneur normalisé (34), les morceaux de montant (12c, 13c) étant posés sur la plaque de fond du deuxième conteneur normalisé (34) et supportant ainsi les éléments de support et d'appui des composants des pôles de contacteur de sectionnement et de mise à la terre ainsi que ceux-ci, et **en ce que** les composants et parties de montant (12b, 13b) restants peuvent être introduits dans le premier conteneur normalisé et/ou le deuxième et/ou dans un troisième.

2. Procédé de transport pour l'installation de commutation selon la revendication 1, **caractérisé en ce que** l'installation est entièrement montée en usine sur la plaque de socle (10) du premier conteneur normalisé (33) et toutes les parties d'installation sont entièrement testées en usine, **en ce que** les composants de l'installation sont séparés de telle façon que les pièces allant ensemble entrent dans un conteneur normalisé, et **en ce que** les composants de l'installation sont assemblés et soumis à un contrôle final après le transport.
